# EUROPEAN PATENT APPLICATION

(11) **EP 4 831 628 A1**
(43) Date of publication of application: **28.10.2026**
(21) Application number: 25886209.3
(22) Date of filing: 30.09.2025
(51) Int. Cl.: G01N 23/046, G01N 23/18, G01N 23/083, G01B 15/00

(54) **BATTERY INSPECTION DEVICE AND METHOD**

(30) Priority: 29.10.2024 KR 20240149210
(71) Applicant: LG Energy Solution, Ltd., Seoul 07335 (KR)
(72) Inventor: LEE, Daewon, Daejeon 34122 (KR); KIM, Tae Young, Daejeon 34122 (KR); LEE, Seungeun, Daejeon 34122 (KR)
(74) Representative: Goddar, Heinz J.
(86) International application number: PCT/KR2025/015397
(87) International publication number: WO 2026/095382

(57) **Abstract**

A battery inspection device according to an embodiment of the present invention is for inspecting a battery including an electrode assembly, and may comprise: at least one processor; and a memory for storing one or more commands executed via the at least one processor. Here, the one or more commands may include commands for: acquiring a vertical cross-sectional image of the battery; defining, in the vertical cross-sectional image, a region of interest (ROI) including an end region of the electrode assembly; calculating a gray value for each height with respect to the ROI; and determining the position of an electrode end on the basis of a rate of change in the gray value.

## Description

### [Technical Field]

This application claims priority to and the benefit of Korean Patent Application No.10-2024-0149210 filed in the Korean Intellectual Property Office on October 29, 2024, the entire contents of which are incorporated herein by reference.

The present invention relates to a battery inspection apparatus and method, and more particularly, to a battery inspection apparatus and method capable of determining whether an electrode assembly is defective using a vertical cross-sectional image of a battery.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be categorized into can-type batteries, where the electrode assembly is housed in a cylindrical metal can, and pouch-type batteries, where the electrode assembly is housed in a pouch-shaped case. Cylindrical can-type batteries are generally known for their relatively high capacity and structural stability.

A jelly roll-type electrode assembly, built into a cylindrical battery, may be manufactured by sequentially stacking a positive electrode sheet, a separator, and a negative electrode sheet and winding the laminated stack for a predetermined number of turns. During a roll-to-roll transport of the laminated stack (cathode, separator, and anode) to produce the jelly roll electrode assembly, if the laminated stack meanders, the end of the cathode or anode of the completed jelly roll electrode assembly may be uneven relative to the horizontal and may have height difference.

Typically, image-based defect inspection techniques using X-ray imaging are utilized to detect meandering defects in the electrode assembly. However, these typical inspection techniques have limitations in inspection accuracy and inspection speed.

Among the prior art documents relevant to the present invention, KR 10-2024-0094660 A is of some relevance.

### [Detailed Description of the Invention]

### [Technical Problem]

To obviate one or more problems of the related art, embodiments of the present disclosure provide a battery inspection apparatus capable of determining whether an electrode assembly is defective using a vertical cross-sectional image of the battery.

To obviate one or more problems of the related art, embodiments of the present disclosure also provide a battery inspection method using the battery inspection apparatus.

### [Technical Solution]

In order to achieve the objective of the present disclosure, a battery inspection apparatus for inspecting a battery including an electrode assembly may include at least one processor and a memory that stores at least one instruction executed by the processor.

The at least one instruction may include an instruction to acquire a vertical cross-sectional image of the battery; an instruction to define a Region of Interest (ROI) in the vertical cross-sectional image, the ROI including an end region of the electrode assembly; an instruction to calculate gray values for each height for the ROI; and an instruction to determine the position of an electrode end based on a rate of change in the gray values.

The instruction to determine the position of the electrode end may include an instruction to determine a height exhibiting a maximum change rate within a predetermined range as the position of the electrode end.

The instruction to determine the position of the electrode end may include an instruction to determine a first height indicating a maximum change rate within a first grayscale range as the position of the first electrode end; and an instruction to determine a second height indicating a maximum change rate within a second grayscale range as the position of the second electrode end.

The instruction to determine the position of the electrode end may include an instruction to determine a first height indicating a maximum change rate within a first height range as the position of the first electrode end; and an instruction to determine a second height indicating a maximum change rate within a second height range as the position of the second electrode end.

The instruction to determine the position of the electrode end may include an instruction to determine a first height indicating a maximum change rate within the entire height range as the position of the first electrode end; an instruction to determine change rates of gray value from a height spaced upward by a determined distance from the first height; and an instruction to determine a second height, representing a maximum change rate among the determined change rates of gray value, as the position of the second electrode end.

The at least one instruction may further include an instruction to calculate a separation distance between the position of the first electrode end and the position of the second electrode end; and an instruction to determine whether the electrode assembly is defective based on whether the separation distance exceeds a threshold distance.

The instruction to define the ROI may include an instruction to define a plurality of ROIs corresponding to each turn of the electrode assembly.

The at least one instruction may further include an instruction to determine whether the electrode assembly has a meandering defect based on the positions of the electrode ends determined for each of the plurality of ROIs.

The instruction to determine whether the electrode assembly has a meandering defect may include an instruction to calculate, for each of the plurality of ROIs, a separation distance between the position of the first electrode end and the position of the second electrode end; and an instruction to determine whether the electrode assembly has a meandering defect based on a number of turns where the separation distance exceeds a threshold distance.

According to another embodiment of the present disclosure, a battery inspection method performed by a battery inspection apparatus may include acquiring a vertical cross-sectional image of the battery; defining a Region of Interest (ROI) in the vertical cross-sectional image, the ROI including an end region of the electrode assembly; calculating gray values for each height for the ROI; and determining the position of an electrode end based on a rate of change in the gray values.

The determining of the position of the electrode end may include determining a height exhibiting a maximum change rate within a predetermined range as the position of the electrode end.

The determining of the position of the electrode end may include determining a first height indicating a maximum change rate within a first grayscale range as the position of the first electrode end and determining a second height indicating a maximum change rate within a second grayscale range as the position of the second electrode end.

The determining of the position of the electrode end may include determining a first height indicating a maximum change rate within a first height range as the position of the first electrode end and determining a second height indicating a maximum change rate within a second height range as the position of the second electrode end.

The method may further include determining a first height indicating a maximum change rate within the entire height range as the position of the first electrode end, determining change rates of gray value from a height spaced upward by a determined distance from the first height, and determining a second height, representing a maximum change rate among the determined change rates of gray value, as the position of the second electrode end.

The method may further include calculating a separation distance between the position of the first electrode end and the position of the second electrode end and determining whether the electrode assembly is defective based on whether the separation distance exceeds a threshold distance.

The defining of the ROI may include defining a plurality of ROIs corresponding to each turn of the electrode assembly.

The method may further include determining whether the electrode assembly has a meandering defect based on the positions of the electrode ends determined for each of the plurality of ROIs.

The determining of whether the electrode assembly has a meandering defect may include calculating, for each of the plurality of ROIs, a separation distance between the position of the first electrode end and determining whether the electrode assembly has a meandering defect based on a number of turns where the separation distance exceeds a threshold distance

### [Advantageous Effects]

According to embodiments of the present disclosure, the accuracy and speed of inspection for defects in the electrode assembly can be improved.

### [Brief Description of the Drawings]

FIG. 1 illustrates the exterior of a battery according to an embodiment of the present invention.
FIG. 2 illustrates the structure of a roll-type electrode assembly according to an embodiment of the present invention.
FIG. 3 illustrates the exterior of a roll-type electrode assembly according to an embodiment of the present invention.
FIG. 4 is a block diagram of a battery inspection system according to embodiments of the present invention.
FIG. 5 is a flowchart illustrating a battery inspection method according to an embodiment of the present invention.
FIGS. 6 to 10 are reference diagrams illustrating the battery inspection method according to an embodiment of the present invention.
FIG. 11 is an operational flowchart of a battery inspection method according to another embodiment of the present invention.
FIGS. 12 and 13 are reference diagrams for explaining a battery inspection method according to another embodiment of the present invention.
FIG. 14 is a block diagram of a battery inspection apparatus according to embodiments of the present invention.

100: battery
200: computed tomography (CT) imaging apparatus
300, 1400: battery inspection apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

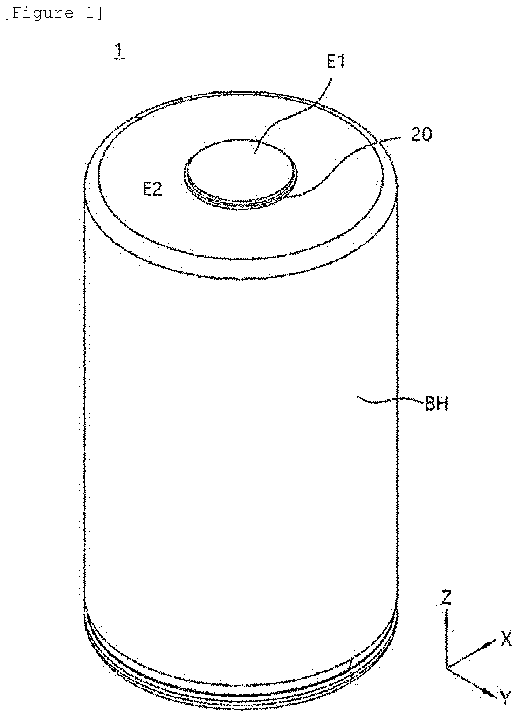

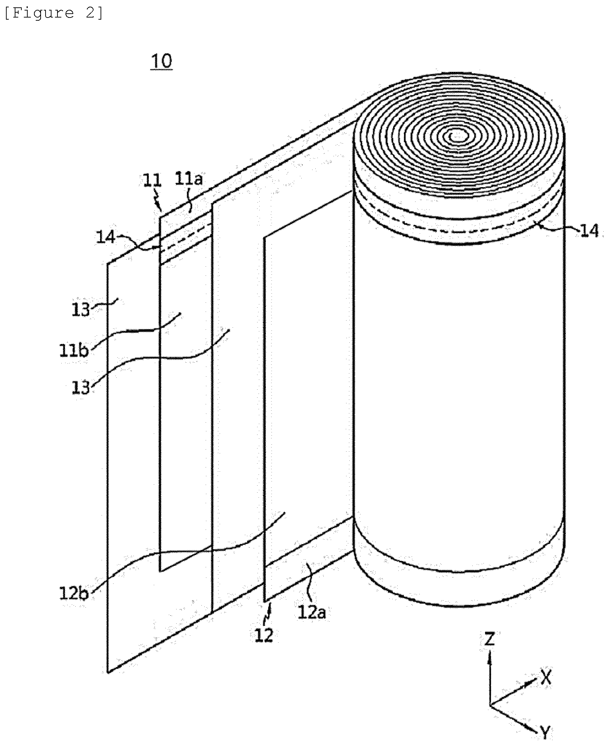

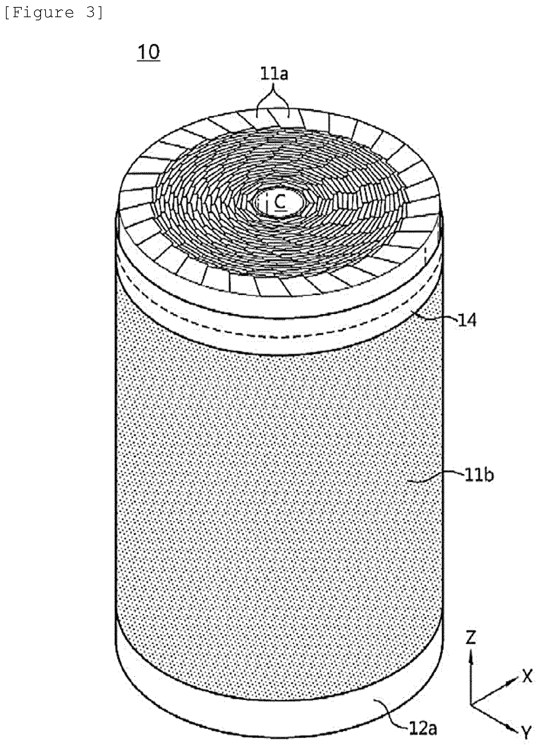

FIG. 1 illustrates the exterior of a battery according to an embodiment of the present invention. Additionally, FIG. 2 illustrates the structure of a roll-type electrode assembly according to an embodiment of the present invention and FIG. 3 illustrates the exterior of a roll-type electrode assembly according to an embodiment of the present invention.

A battery inspection apparatus according to embodiments of the present invention may inspect a cylindrical battery 1 for defects.

Referring to FIG. 1, the cylindrical battery 1 may include a battery housing BH, a first electrode terminal E1 and a second electrode terminal E2 formed on the outer surface of the battery housing (BH). Here, the first electrode terminal E1 and the second electrode terminal E2 are terminals with opposite polarities. For example, the first electrode terminal E1 is a positive terminal and the second electrode terminal E2 is a negative terminal, or the first electrode terminal E1 is a negative terminal and the second electrode terminal E2 is a positive terminal.

The battery 1 may include an insulating gasket 20 that blocks the electrical connection between the battery housing (BH) and the first electrode terminal E1.

Referring to FIG. 2, a wound-type (jelly roll type) electrode assembly 10 may be accommodated within the battery housing (BH).

The electrode assembly 10 may include a first electrode 11 having a first polarity, a second electrode 12 having a second polarity, a separator 13 interposed between the first electrode 11 and the second electrode 12, and an insulating layer 14 covering at least a portion of the first electrode 11.

The first electrode 11 and the second electrode 12 may have a sheet shape. Here, the electrode assembly 10 may be manufactured by sequentially stacking the first electrode 11, the separator 13, and the second electrode 12 to form a laminated stack and winding the stack for a determined number of turns.

The first electrode 11 and the second electrode 12 may include non-coated regions 11a, 12a, where an active material layer is not coated, on ends of the long sides of the electrodes. In addition, the first electrode 11 and the second electrode 12 may include coated regions 11b, 12b in which an active material layer is coated in an area excluding the non-coated portion 11a, 12a.

Referring to FIG. 3, at least a portion of the first and second non-coated regions 11a, 12a may be bent toward the center. Here, at least a portion of the first and second non-coated portions 11a, 12a may be divided into a plurality of segments and the plurality of segments may be overlapped in multiple layers while being bent toward the center.

Meanwhile, during a roll-to-roll transport of the laminated stack (first electrode, separator, second electrode) to manufacture a jelly roll-type electrode assembly 10 illustrated in FIG. 2, if the laminated stack meanders, the ends of the first or second electrode of the completed electrode assembly 10 may not be flat relative to the horizontal direction and may have height difference.

Generally, image-based defect inspection technology using X-ray images is utilized to determine meandering (or misalignment) defects in such electrode structures. However, this general inspection technology has limitations in terms of inspection accuracy and inspection speed.

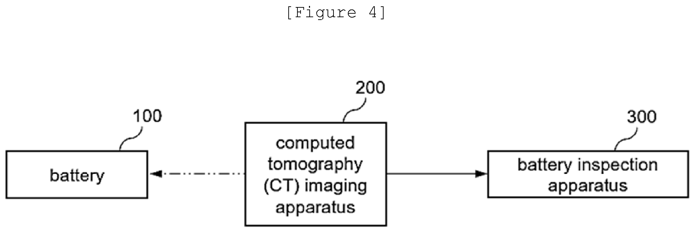

FIG. 4 is a block diagram of a battery inspection system according to embodiments of the present invention.

The battery inspection system according to embodiments of the present invention may be utilized in a process for inspecting meandering defects in the electrode assembly included in a battery 100.

The battery inspection system may include a computed tomography (CT) imaging apparatus 200 configured to generate a vertical cross-sectional image of the battery 100, and a battery inspection apparatus 300 configured to acquire the vertical cross-sectional image of the battery from the tomography device 200 and use the vertical cross-sectional image to determine whether the electrode assembly included in the battery 100 is defective.

The battery 100 according to embodiments of the present invention may correspond to a cylindrical battery cell, and an electrode assembly included in the battery 100 may correspond to a coiled (jelly roll) type electrode assembly, but the scope of the present invention is not limited thereto.

The CT imaging apparatus 200 may generate one or more vertical cross-sectional images of the battery 100. Here, the CT imaging apparatus 200 may irradiate the battery 100 with X-rays and detect the X-rays that have passed through the interior of the battery 100 to generate a vertical cross-sectional image of the battery 100.

The battery inspection apparatus 300 may obtain one or more vertical cross-sectional images of the battery 100 from the CT imaging apparatus 200 and determine whether the electrode assembly included in the battery 100 is defective using the vertical cross-sectional image. Here, the vertical cross-sectional image may refer to a vertical cross-sectional image passing through the central axis of the battery 100.

The battery inspection apparatus 300 may define one or more ROIs (Regions of Interests) that include end regions of the electrode assembly in the vertical cross-sectional image and determine the positions of the electrode ends in the ROIs. Thereafter, the battery inspection apparatus 300 may determine whether the electrode assembly is defective based on the positions of the electrode ends in the ROIs.

In an embodiment, the battery inspection apparatus 300 may define a plurality of ROIs containing the end regions of the electrode assembly in a vertical cross-sectional image and determine the position of the electrode end in each ROI. Thereafter, the battery inspection apparatus 300 may determine whether the electrode assembly exhibits a meandering defect based on the positions of the electrode ends determined for each of the plurality of ROIs.

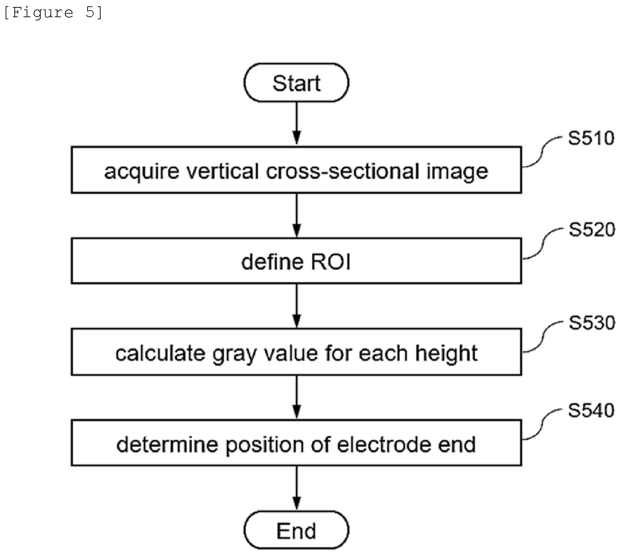

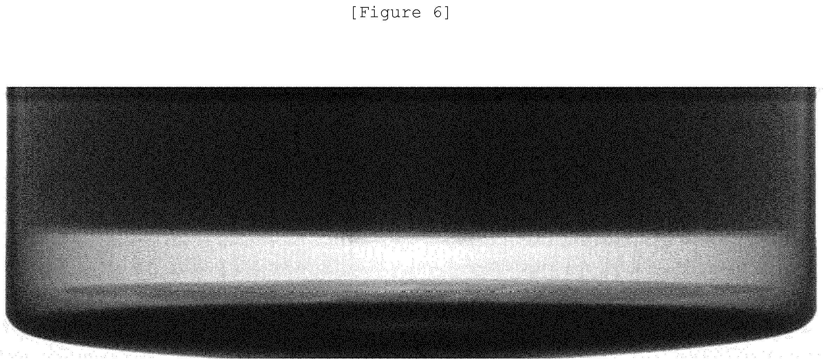

FIG. 5 is a flowchart illustrating a battery inspection method according to an embodiment of the present invention, and FIGS. 6 to 10 are reference diagrams for illustrating the battery inspection method according to an embodiment of the present invention.

The battery inspection method according to an embodiment of the present invention may be performed by a battery inspection apparatus that is connected to a CT imaging apparatus.

The battery inspection apparatus may acquire a vertical cross-sectional image of the battery (S510). Here, the battery inspection apparatus may receive the vertical cross-sectional image from the CT imaging apparatus.

The vertical cross-sectional image may be an image of at least a portion of a vertical cross-section passing through the center of the battery. For example, the vertical cross-sectional image may be an image of the lower region of the vertical cross-section passing through the central axis of the cylindrical battery, as illustrated in FIG. 6.

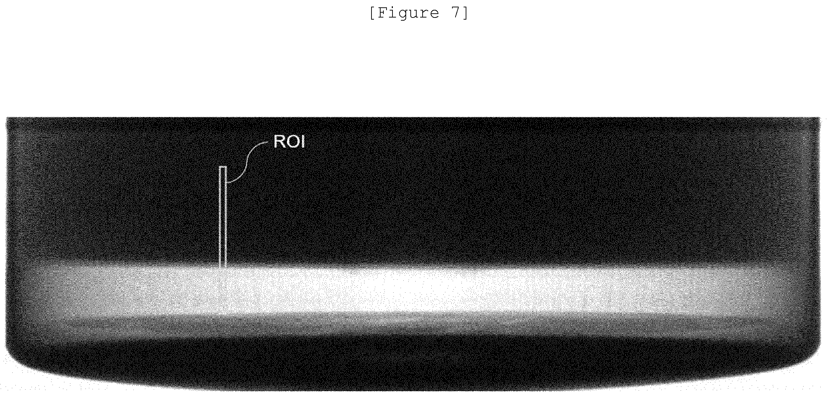

The battery inspection apparatus may define one or more ROIs, including the end region of the electrode assembly, in the vertical cross-sectional image (S520). Here, the ROI may be defined as an area corresponding to a specific winding turn of the electrode assembly. For example, referring to FIG. 7, a wound electrode assembly may be manufactured by winding it with 56 turns, and the battery inspection apparatus may define the area of a specific turn as an ROI.

The battery inspection apparatus may define an ROI in the vertical cross-sectional image based on a ROI setting signal input by a user, or may define an ROI in the vertical cross-sectional image using an image analysis tool, such as a line detection algorithm.

The battery inspection apparatus may calculate a gray value for each height in the ROIs defined in S520 (S530).

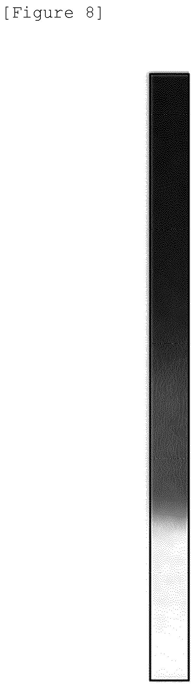

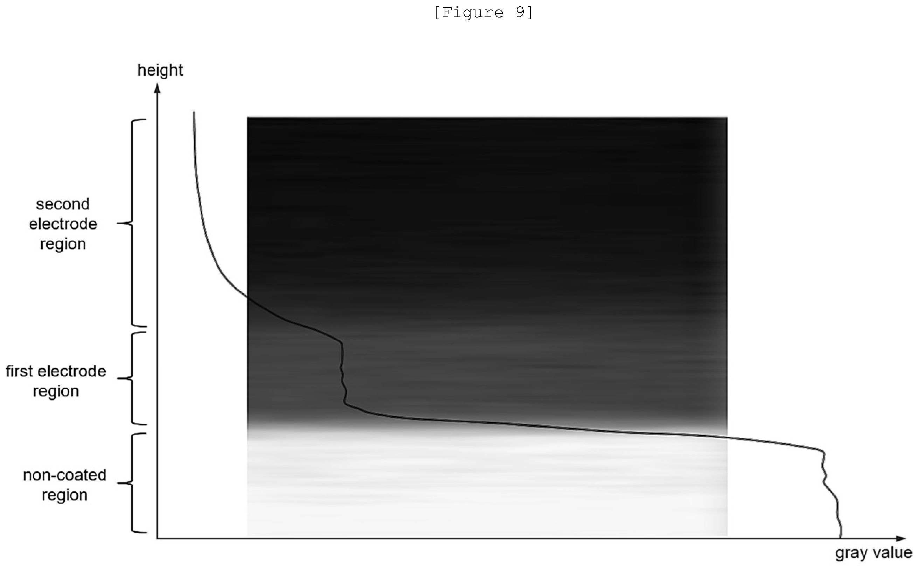

For example, the battery inspection apparatus may generate a height-based grayscale graph (Fig. 9) for the ROI illustrated in Fig. 8, where the battery height is defined as the y-axis and the gray value as the x-axis. Here, the gray value is a numerical representation of brightness, with black defined as [0] and white defined as [255].

The battery inspection apparatus may determine the position of the electrode end based on a change rate of gray value (S540).

Referring to FIG. 9, the lower region (non-coated region) exhibits a high gray value, and the gray value may decrease rapidly near the location of the first electrode end (boundary between non-coated region and first electrode region). The gray value in the first electrode region may be maintained at a constant level, and the gray value may decrease gradually from near the second electrode end (the boundary between the first and second electrode regions).

The present disclosure utilizes the change rate of gray value to more accurately determine positions of the ends of one or more of the first electrode and second electrode.

Specifically, the battery inspection apparatus may determine a height exhibiting the maximum change rate within a predetermined range as the position of the electrode end.

In a first embodiment, the battery inspection apparatus may determine a first height exhibiting the maximum change rate within a first grayscale range as the position of the first electrode end, and a second height exhibiting the maximum change rate within a second grayscale range as the position of the second electrode end.

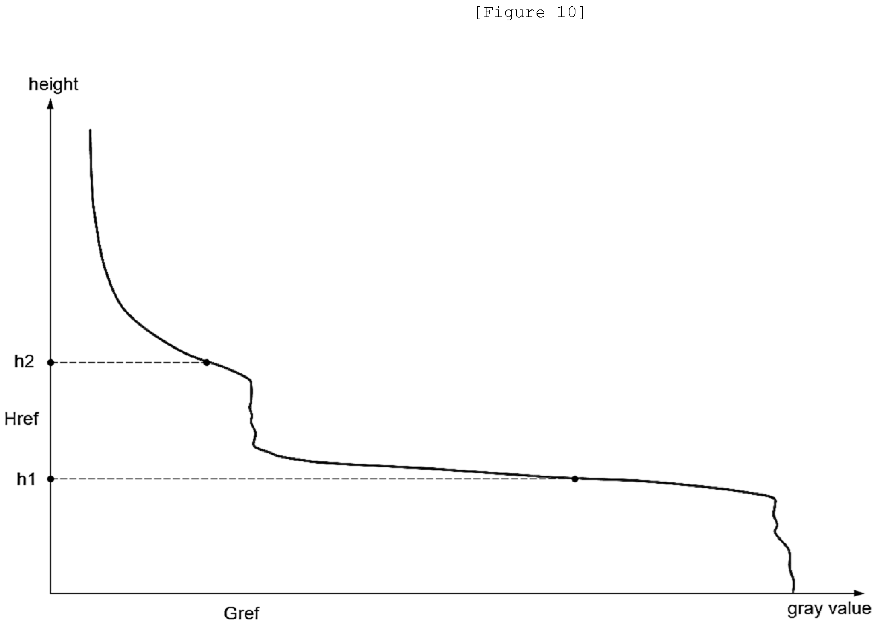

For example, referring to FIG. 10, the battery inspection apparatus may calculate the change rate of gray value by height in a first range that is greater than or equal to Gref (e.g., 65), and determine the first height (h1) that exhibits the maximum change rate in the first range as the location of the negative electrode end. In addition, the battery inspection apparatus may calculate the change rate of gray value by height in a second range that is less than Gref (e.g., 65), and determine the second height (h2) that exhibits the maximum change rate in the second range as the location of the positive electrode end.

In a second embodiment, the battery inspection apparatus may determine a first height that exhibits the maximum change rate within a first height range as the location of the first electrode end, and determine the second height that exhibits the maximum change rate within a second height range as the location of the second electrode end.

For example, referring to FIG. 10, the battery inspection apparatus may calculate a change rate of gray value by height in a first range that is less than Href (e.g., 60 pixels), and determine the first height (h1) that exhibits the maximum change rate in the first range as the location of the negative electrode end. In addition, the battery inspection apparatus may calculate a change rate of gray value by height in a second range that is greater than or equal to Href (e.g., 60 pixels), and determine the second height (h2) that exhibits the maximum change rate in the second range as the location of the positive electrode end.

In a third embodiment, the battery inspection apparatus may determine a first height that exhibits the maximum change rate within the entire height range as the location of the first electrode end. Thereafter, the battery inspection apparatus may sequentially check the change rates of gray value from a height spaced upward by a set distance from the first height, and determine a second height that exhibits the maximum change rate among the checked change rates of gray value as the location of the second electrode end.

For example, referring to FIG. 10, the battery inspection apparatus may calculate a change rate of gray value by height across the entire range and determine a first height (h1) representing the maximum change rate as the location of the negative electrode end. Thereafter, the battery inspection apparatus may determine a change rate of gray value from a height spaced upward by a set distance (e.g., 30 pixels) from the first height (h1), and determine a second height (h2) representing the maximum change rate among the determined change rates of gray value as the location of the positive electrode end.

The battery inspection apparatus may calculate the separation distance (d = h2 - h1) between the location of the first electrode end (h1) and the location of the second electrode end (h2). Thereafter, the battery inspection apparatus may determine whether the electrode assembly is defective based on whether the separation distance (d) between the first and second electrode ends exceeds a threshold distance.

For example, if the separation distance (d) between the first and second electrode ends exceeds 32 pixels, the battery inspection apparatus may determine that the electrode assembly is defective.

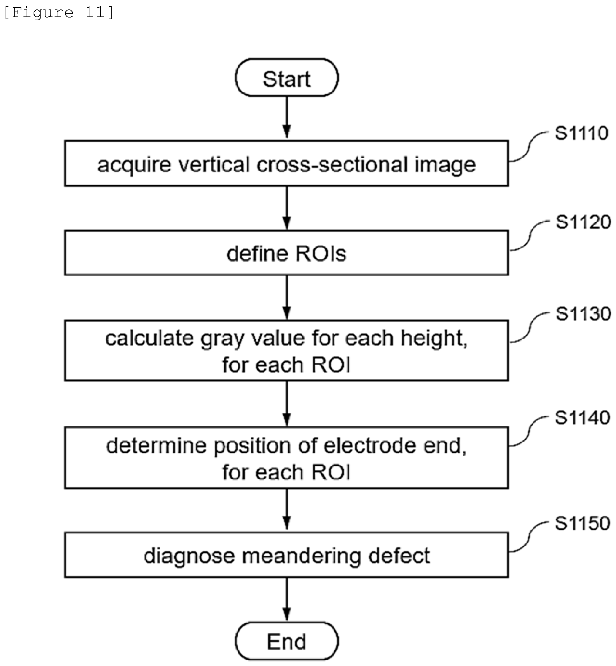

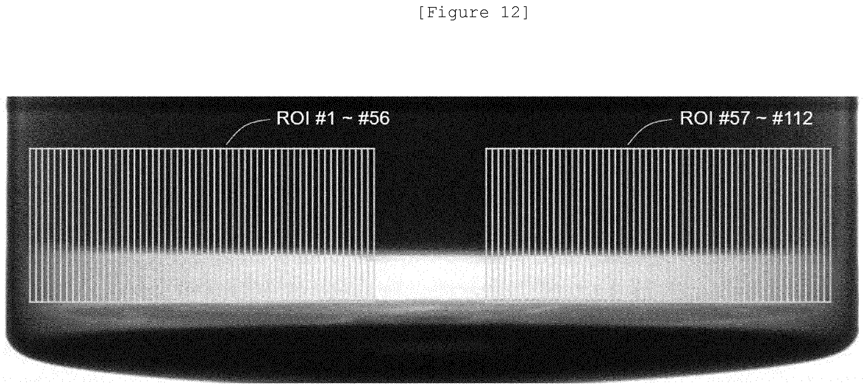

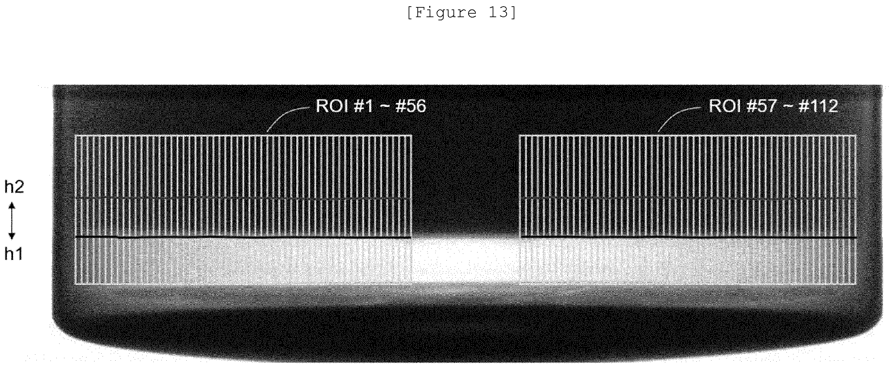

FIG. 11 is an operational flowchart of a battery inspection method according to another embodiment of the present invention, and FIGS. 12 and 13 are reference diagrams for explaining a battery inspection method according to another embodiment of the present invention.

The battery inspection apparatus may acquire a vertical cross-sectional image of the battery (S1110). Here, the battery inspection apparatus may receive the vertical cross-sectional image from a CT imaging apparatus.

The battery inspection apparatus may define one or more ROIs (regions of interests) in the vertical cross-sectional image, each including an end region of the electrode assembly (S1120). Here, each ROI may be defined as an area corresponding to each winding turn of the electrode assembly. For example, referring to FIG. 12, a wound electrode assembly may be manufactured by winding it with 56 turns, and the battery inspection apparatus may define 112 ROIs in the vertical cross-sectional image, each corresponding to each winding turn area.

The battery inspection apparatus may define ROIs in a vertical cross-sectional image based on a user-entered ROI setting signal, or may define ROIs in a vertical cross-sectional image using an image analysis tool, such as a line detection algorithm.

The battery inspection apparatus may calculate a height-specific gray value for each ROI defined in step S1120 (step S1130).

For example, the battery inspection apparatus may generate a height-specific grayscale graph (FIG. 9) for each of the 112 ROIs, in which the battery height is defined as the y-axis and the gray value as the x-axis.

The battery inspection apparatus may determine the position of the electrode end for each ROI based on a change rate of gray value (step S1140). Here, the battery inspection apparatus may determine the position (h1) of a first electrode end and the position (h2) of a second electrode end for each ROI.

For example, as illustrated in FIG. 13, the battery inspection apparatus may determine the location (h1) of the negative electrode end and the location (h2) of the positive electrode end for each ROI. Meanwhile, the line connecting the locations (h1) of a negative electrode end in each ROI may be understood as a negative electrode end line, representing the boundary between the uncoated region and the negative electrode. Furthermore, the line connecting the locations (h2) of the positive electrode end in each ROI may be understood as a positive electrode end line, representing the boundary between the negative electrode and the positive electrode.

The battery inspection apparatus may determine whether the electrode assembly exhibits a meandering defect based on the locations of the electrode ends determined for each of the plurality of ROIs (S1150).

For example, the battery inspection apparatus may calculate the separation distance (d = h2 - h1) between the location (h1) of the first electrode end and location (h2) of the second electrode end for each ROI. Thereafter, the battery inspection apparatus may determine a number of turns (or a number of ROIs) where the separation distance (d) between the first and second electrode ends exceeds a threshold distance. If the number of turns where the separation distance (d) exceeds the threshold distance (e.g., 32 pixels) is greater than or equal to a determined value (e.g., 2), the battery inspection apparatus may determine that the electrode assembly has a meandering defect.

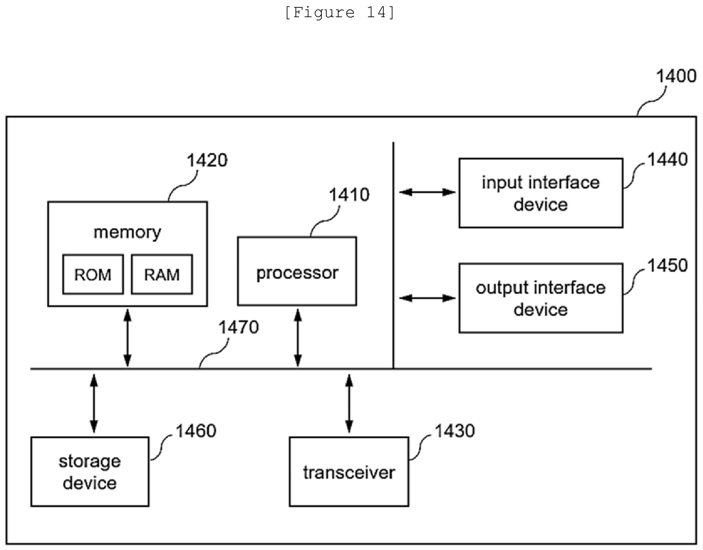

FIG. 14 is a block diagram of a battery inspection apparatus according to embodiments of the present invention.

The battery inspection apparatus 1400 according to embodiments of the present invention may be linked to a CT imaging apparatus.

The battery inspection apparatus 1400 may include at least one processor 1410, a memory 1420 that stores at least one instruction executed by the processor, and a transceiver 1430 connected to a network to perform communication.

The at least one instruction may include an instruction to acquire a vertical cross-sectional image of the battery; an instruction to define a Region of Interest (ROI) in the vertical cross-sectional image, the ROI including an end region of the electrode assembly; an instruction to calculate gray values for each height for the ROI; and an instruction to determine the position of an electrode end based on a rate of change in the gray values.

The instruction to determine the position of the electrode end may include an instruction to determine a height exhibiting a maximum change rate within a predetermined range as the position of the electrode end.

The instruction to determine the position of the electrode end may include an instruction to determine a first height indicating a maximum change rate within a first grayscale range as the position of the first electrode end; and an instruction to determine a second height indicating a maximum change rate within a second grayscale range as the position of the second electrode end.

The instruction to determine the position of the electrode end may include an instruction to determine a first height indicating a maximum change rate within a first height range as the position of the first electrode end; and an instruction to determine a second height indicating a maximum change rate within a second height range as the position of the second electrode end.

The instruction to determine the position of the electrode end may include an instruction to determine a first height indicating a maximum change rate within the entire height range as the position of the first electrode end; an instruction to determine change rates of gray value from a height spaced upward by a determined distance from the first height; and an instruction to determine a second height, representing a maximum change rate among the determined change rates of gray value, as the position of the second electrode end.

The at least one instruction may further include an instruction to calculate a separation distance between the position of the first electrode end and the position of the second electrode end; and an instruction to determine whether the electrode assembly is defective based on whether the separation distance exceeds a threshold distance.

The instruction to define the ROI may include an instruction to define a plurality of ROIs corresponding to each turn of the electrode assembly.

The at least one instruction may further include an instruction to determine whether the electrode assembly has a meandering defect based on the positions of the electrode ends determined for each of the plurality of ROIs.

The instruction to determine whether the electrode assembly has a meandering defect may include an instruction to calculate, for each of the plurality of ROIs, a separation distance between the position of the first electrode end and the position of the second electrode end; and an instruction to determine whether the electrode assembly has a meandering defect based on a number of turns where the separation distance exceeds a threshold distance.

In addition, the battery inspection apparatus 1400 according to embodiments of the present invention may further include an input interface device 1440, an output interface device 1450, a storage device 1460, etc. Respective components included in the battery inspection apparatus 1400 may be connected by a bus 1470 and can communicate with each other.

Here, the processor 1410 may mean a central processing unit (CPU), a graphics processing unit (GPU), or a dedicated processor on which methods according to embodiments of the present invention are performed. Furthermore, the memory may include one or more of a volatile/transitory recording medium and a nonvolatile/non-transitory recording medium. For example, the memory may include at least one of a read-only memory (ROM) and a random access memory (RAM), and may include an Electrically Erasable Programmable Read-only Memory (EEPROM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

The operations of the method according to embodiments of the present invention may be implemented in various forms related to programs, such as a computer program or code itself, or a computer program product.

Furthermore, the computer-readable recording medium may include one or more of a volatile/transitory recording medium and a non-volatile/non-transitory recording medium.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery inspection apparatus for inspecting a battery including an electrode assembly, the apparatus comprising:
at least one processor; and
a memory storing at least one instruction executed by the at least one processor,
wherein the at least one instruction includes:
an instruction to acquire a vertical cross-sectional image of the battery;
an instruction to define a Region of Interest (ROI) in the vertical cross-sectional image, the ROI including an end region of the electrode assembly;
an instruction to calculate gray values for each height for the ROI; and
an instruction to determine the position of an electrode end based on a rate of change in the gray values.

2. The apparatus of claim 1, wherein the instruction to determine the position of the electrode end includes: an instruction to determine a height exhibiting a maximum change rate within a predetermined range as the position of the electrode end.

3. The apparatus of claim 2, wherein the instruction to determine the position of the electrode end includes:
an instruction to determine a first height indicating a maximum change rate within a first grayscale range as the position of the first electrode end; and
an instruction to determine a second height indicating a maximum change rate within a second grayscale range as the position of the second electrode end.

4. The apparatus of claim 2, wherein the instruction to determine the position of the electrode end includes:
an instruction to determine a first height indicating a maximum change rate within a first height range as the position of the first electrode end; and
an instruction to determine a second height indicating a maximum change rate within a second height range as the position of the second electrode end.

5. The apparatus of claim 2, wherein the instruction to determine the position of the electrode end includes:
an instruction to determine a first height indicating a maximum change rate within the entire height range as the position of the first electrode end;
an instruction to determine change rates of gray value from a height spaced upward by a determined distance from the first height; and
an instruction to determine a second height, representing a maximum change rate among the determined change rates of gray value, as the position of the second electrode end.

6. The apparatus of any one of claims 3 to 5, wherein the at least one instruction further includes:
an instruction to calculate a separation distance between the position of the first electrode end and the position of the second electrode end; and
an instruction to determine whether the electrode assembly is defective based on whether the separation distance exceeds a threshold distance.

7. The apparatus of claim 1, wherein the instruction to define the ROI includes: an instruction to define a plurality of ROIs corresponding to each turn of the electrode assembly.

8. The apparatus of claim 7, wherein the at least one instruction further includes: an instruction to determine whether the electrode assembly has a meandering defect based on the positions of the electrode ends determined for each of the plurality of ROIs.

9. The apparatus of claim 8, wherein the instruction to determine whether the electrode assembly has a meandering defect includes:
an instruction to calculate, for each of the plurality of ROIs, a separation distance between the position of the first electrode end and the position of the second electrode end; and
an instruction to determine whether the electrode assembly has a meandering defect based on a number of turns where the separation distance exceeds a threshold distance.

10. A battery inspection method performed by a battery inspection apparatus, the method comprising:
acquiring a vertical cross-sectional image of the battery;
defining a Region of Interest (ROI) in the vertical cross-sectional image, the ROI including an end region of the electrode assembly;
calculating gray values for each height for the ROI; and
determining the position of an electrode end based on a rate of change in the gray values.

11. The method of claim 10, wherein the determining of the position of the electrode end includes:determining a height exhibiting a maximum change rate within a predetermined range as the position of the electrode end.

12. The method of claim 11, wherein the determining of the position of the electrode end includes:
determining a first height indicating a maximum change rate within a first grayscale range as the position of the first electrode end; and
determining a second height indicating a maximum change rate within a second grayscale range as the position of the second electrode end.

13. The method of claim 11, wherein the determining of the position of the electrode end includes:
determining a first height indicating a maximum change rate within a first height range as the position of the first electrode end; and
determining a second height indicating a maximum change rate within a second height range as the position of the second electrode end.

14. The method of claim 11, wherein the determining of the position of the electrode end includes:
determining a first height indicating a maximum change rate within the entire height range as the position of the first electrode end;
determining change rates of gray value from a height spaced upward by a determined distance from the first height; and
determining a second height, representing a maximum change rate among the determined change rates of gray value, as the position of the second electrode end.

15. The method of any one of claims 12 to 14, further comprising:
calculating a separation distance between the position of the first electrode end and the position of the second electrode end; and
determining whether the electrode assembly is defective based on whether the separation distance exceeds a threshold distance.

16. The method of claim 10, wherein the defining of the ROI includes: defining a plurality of ROIs corresponding to each turn of the electrode assembly.

17. The method of claim 16, further comprising: determining whether the electrode assembly has a meandering defect based on the positions of the electrode ends determined for each of the plurality of ROIs.

18. The method of claim 17, wherein the determining of whether the electrode assembly has a meandering defect includes:
calculating, for each of the plurality of ROIs, a separation distance between the position of the first electrode end; and
determining whether the electrode assembly has a meandering defect based on a number of turns where the separation distance exceeds a threshold distance.
